# EUROPÄISCHE PATENTSCHRIFT

(11) **EP 0 602 077 B1**
(45) Veröffentlichungstag und Bekanntmachung des Hinweises auf die Patenterteilung: **15.03.1995**
(21) Anmeldenummer: 92917620.4
(22) Anmeldetag: 22.08.1992
(51) Int. Cl.: G01G 19/415, H01H 13/70

(54) **TASTATUR**
KEYBOARD
CLAVIER

(30) Priorität: 03.09.1991 DE 4129234
(43) Veröffentlichungstag der Anmeldung: 22.06.1994
(73) Patentinhaber: Bizerba GmbH & Co. KG, D-72336 Balingen (DE)
(72) Erfinder: KRAFT, Horst, D-7460 Balingen-Frommern (DE); DEKORSY, Gerhard, D-7760 Radolfzell (DE)
(74) Vertreter: Hoeger, Stellrecht & Partner
(86) Internationale Anmeldenummer: EP9201931
(87) Internationale Veröffentlichungsnummer: WO9305373

(56) Entgegenhaltungen:
- EP-A- 0 325 757
- EP-A- 0 397 092
- EP-A- 0 423 924
- DE-A- 3 310 313
- DE-A- 3 345 372
- DE-A- 3 501 046
- US-A- 4 360 716
- FEINWERKTECHNIK + MESSTECHNIK, Bd. 95, Nr. 6, Oktober 1987, München, DE, Seiten 353-357, Horst Kraft: "Gerätebau-Problemlösung für eine Selbstbedinungswaage"

## Beschreibung

Die Erfindung betrifft eine Tastatur für eine vollektronische mikrocomputer-gesteuerte Ladenwaage mit Abrufspeicher, insbesondere für Selbsbedienungs- oder Schnellbedienungszwecke mit einer Tastatur, bestehend aus einer Vielzahl von Einzeltasten mit Betätigungselementen, wobei den Einzeltasten Symbole und/oder alphanumerische Kennzeichnungen zugeordnet sind, die Tastatur eine Führungsplatte mit einer Vielzahl von in einem bestimmten Rasterabstand angeordneten Einzeltasten mit Schaltkontaktelementen umfaßt, und wobei die Führungsplatte flächendeckend mit Betätigungselementen für die Einzeltasten versehen ist.

Mittels einer solchen Tastatur, die z. B. aus DE-A-33 45 372 bekannt ist, wird der gespeicherte Grundpreis (Preis pro Gewichtseinheit) einer bestimmten Ware aus einem Speicher abgerufen, der dann mit dem von der Waage ermittelten Gewicht multipliziert wird, worauf die Waage den Verkaufspreis der aufgelegten Ware errechnet und anzeigt.

Je nachdem, ob eine derartige Ladenwaage mehr für Selbstbedienungs- ("SB-") oder für Schnellbedienungs- ("QS-) Zwecke eingesetzt wird, werden die Einzeltasten der Tastatur üblicherweise mit Piktogrammen (Symbolen) oder alphanumerischen Bezeichnungen versehen, wobei im allgemeinen bei SB-Waagen Einzeltasten mit größeren Piktogrammen und bei QS-Waagen kleinere, alphanumerisch beschriftete Einzeltasten in größerer Stückzahl eingesetzt werden. Dies hängt hauptsächlich damit zusammen, daß das Warenangebot in der Umgebung einer SB-Waage in der Regel kleiner ist, als das Warenangebot in Verbindung mit einer QS-Waage und geschultem Verkaufspersonal.

Je nach Einsatzzweck der Ladenwaage und dem Warenangebot ist eine auswechselbare Warenkennzeichnung an der Tastatur erwünscht. Eine solche auswechselbare Kennzeichnung ist in DE-A1-33 45 372 beschrieben. Des weiteren ist es aus EP-A1-397 092 bekannt, beliebig eingeteilte Tastenfolien für Waagentastaturen zu verwenden, wobei die einzelnen Teile der Tastenfolien auch mehrere Einzeltasten überdecken können.

Ein genereller Nachteil der heute verwendeten Lösungen liegt darin, daß die Tastatur im Bezug auf die Größe der Piktogramme nur auf eine einzige Größe ausgelegt ist oder daß die Piktogramme nicht auf einfache Weise austauschbar sind.

Es ist Aufgabe der Erfindung, eine gattungsgemäße Tastatur so auszubilden, daß Warenkennzeichnungen in Form von Piktogrammen und/oder Beschriftungen der Art und Größe nach schnell und einfach geändert und damit dem jeweiligen Warenangebot angepaßt und betriebs- sowie überlastsicher ausgeführt werden können, wobei es insbesondere auch möglich sein soll, Sonderangebote durch übergroße, optimal plazierte Tastenbereiche hervorzuheben und die Tasten in diesem Bereich gemeinsam zu betätigen.

Die Aufgabe wird erfindungsgemäß durch die kennzeichnenden Merkmale des Patentanspruchs 1 gelöst.

Bevorzugte Ausführungsformen der Erfindung sind Gegenstand der Unteransprüche 2 und 3, wobei die Merkmale des Unteranspruchs 3 teilweise aus EP-A1-423 924 bekannt sind.

Die nachstehende Beschreibung einer bevorzugten Ausführungsform der Erfindung dient im Zusammenhang mit beiliegender Zeichnung der weiteren Erläuterung. Es zeigen:
- Fig. 1: schematisch eine schaubildliche Ansicht einer Selbstbedienungs-Ladenwaage mit integrierter Tastatur;
- Fig. 2: eine Teilschnittansicht der Tastatur aus Fig. 1;
- Fig. 3: eine abgebrochene Draufsicht der Tastatur aus Figur 1 und 2 mit einzelnen, Waren-Kennzeichnungen tragenden Betätigungselementen und
- Fig. 4a-4b: ein Betätigungselement mit gelenkartigen Verschwächungen.

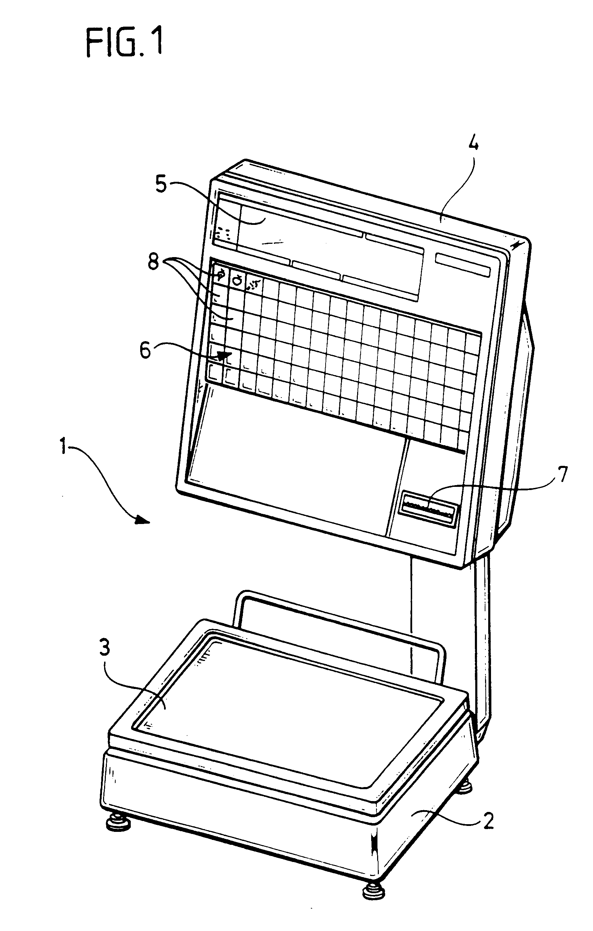

Die in Figur 1 dargestellte Selbstbedienungs-Ladenwaage 1 umfaßt im wesentlichen eine auf einem Waagengestell angeordnete Wägeplatte 3 zur Aufnahme eines Wägegutes sowie einen aufgeständerten Anzeige- und Bedienungsteil 4 mit Anzeigefeld 5, Tastatur 6 und Drucker, wobei von letzterem nur ein Schlitz 7 zur Ausgabe eines Etiketts mit den üblichen Verkaufsdaten, wie Grundpreis, Gewicht, Gesamtpreis usw. dargestellt ist. Die an der Vorderseite des Anzeige- und Bedienungsteils 4 ortsfest angebrachte Tastatur 6 ist mit zahlreichen, beispielsweise 96 Einzeltasten 8 versehen. Die Einzeltasten 8 sind mit Waren-Kennzeichnungen (sogenannte Piktogramme [Symbole] und/oder Beschriftungen) versehen, wobei die Tasten 8 in bekannter Weise als sogenannte Minihubtasten mit Schnappeffekt ausgeführt sind.

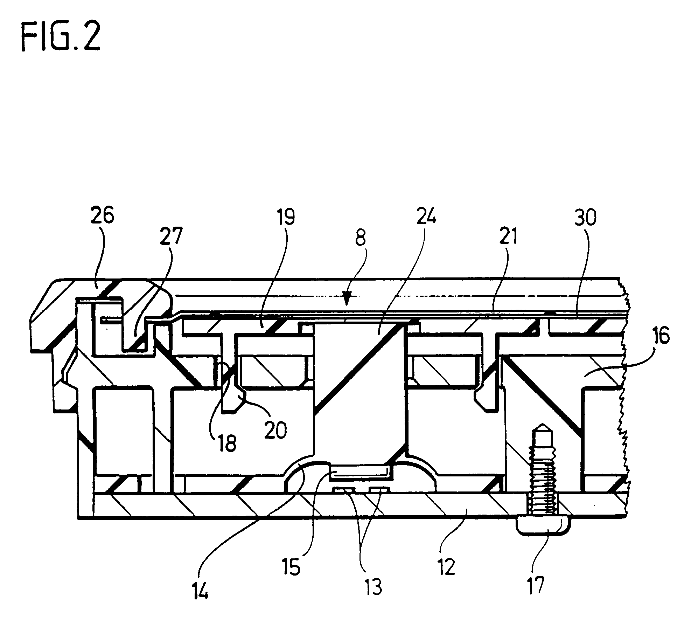

Die Figur 2 zeigt im Schnitt im wesentlichen eine Einzeltaste 8 der Tastatur 6 mit den dieser Taste zugeordneten Schaltkontaktelementen. Die Tastatur 6 umfaßt eine Leiterplatte 12 mit Leiterbahnen 13. Über der Leiterplatte 12 ist eine elastische Kontaktmatte 14 angeordnet, die an ihrer Unterseite an einem nach oben gewölbten Bereich jeweils ein Kontaktelement 15 aus elektrisch leitendem Material aufweist. Über der Kontaktmatte 14 ist in einem bestimmten Abstand eine Führungsplatte 16 vorgesehen. Führungsplatte 16, Kontaktmatte 14 und Leiterplatte 12 sind durch Schrauben 17 miteinander verbunden. In der Führungsplatte 16 sind vertikal verschieblich in Fixieröffnungen 18 Betätigungselemente 19 geführt und zugleich mittels an ihnen vorgesehener Rasthaken 20 leicht lös- und auswechselbar verrastet.

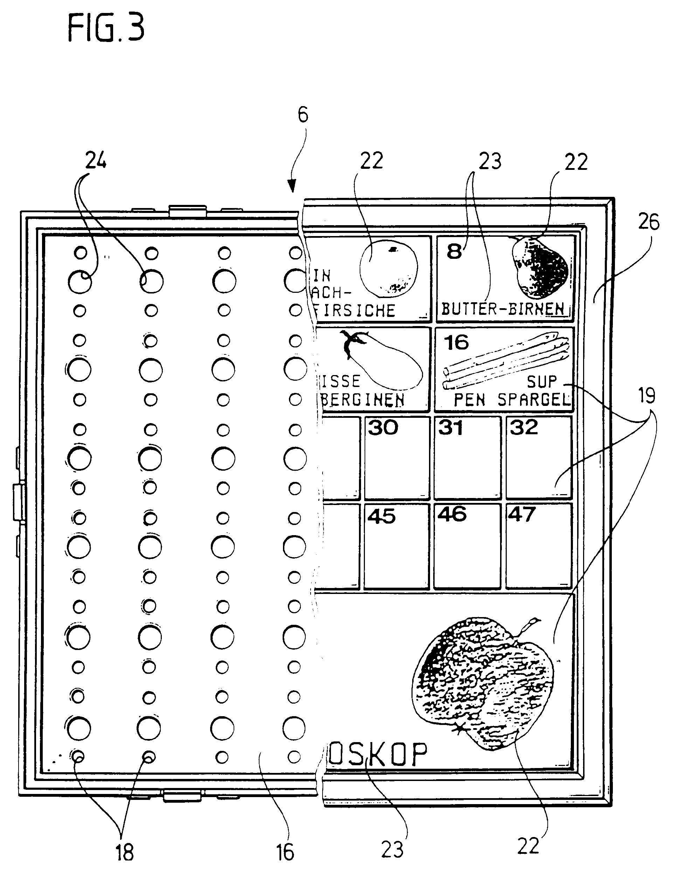

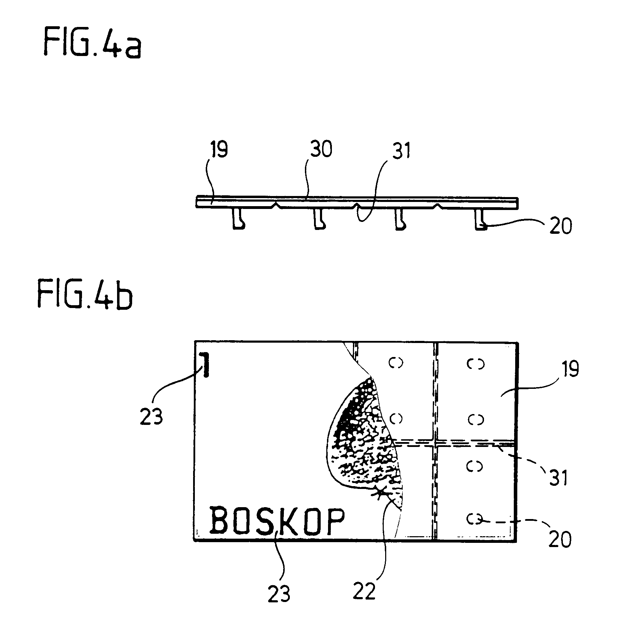

Die im wesentlichen starren Betätigungselemente 19 tragen aufgeklebte Folien 30 mit Waren-Symbolen 22 bzw. alphanumerischen Waren-Kennzeichnungen 23 (Figur 3 und 4). Beim Betätigen eines Elements 19 mit dem Finger drückt dasselbe den nach oben gewölbten Bereich der Kontaktmatte 14 über ein an dieser Matte ausgebildetes Druckelement 24 nach unten. Das Kontaktelement 15 erzeugt hierdurch auf der Leiterplatte 12 eine elektrisch leitende Verbindung zwischen den Leiterbahnen 13. Die Kontaktmatte 14 ist so beschaffen, daß dabei ein Schnappeffekt und eine definierte Rückstellkraft entsteht. Zugleich dient die Kontaktmatte 14 als Schutz gegen Staub und Feuchtigkeit.

Des weiteren ist das Druckelement 24 in seiner Länge und in seiner Festigkeit so ausgelegt, daß beim Überschreiten einer bestimmten Bestätigungskraft das Betätigungselement 19 an der Führungsplatte 16 zur Anlage kommt und damit die Kontaktstelle 13, 15 vor Überlastung schützt.

Die Betätigungselemente 19 sind im Bereich der gesamten Tastatur 6 an der Oberseite durch eine durchgehende Schutzfolie 21 abgedeckt, die von einem äußeren Rahmen 26 niedergehalten und mittels Stiften 27 fixiert ist.

Bei der dargestellten Ausführungsform sind die Folien 30 mit den Waren-Symbolen 22 bzw. -Kennzeichnungen 23 auf die Betätigungselemente 19 aufgeklebt. Bei einer anderen Ausführungsform der Erfindung sind die Waren-Symbole 22 bzw. -Kennzeichnungen 23 auf einer zwischengelegten, nicht dargestellten, durchgehenden Beschriftungsfolie anstelle der Folie 30 befestigt. Bei einer weiteren Variante ist die Schutzfolie 21 selbst entsprechend mit Symbolen 22 bzw. alphanumerischen Kennzeichnungen 23 versehen. Die Folie 30 könnte ebenfalls durchgehend ausgebildet sein.

Die Figur 3 zeigt die Tastatur 6 teilweise in Draufsicht, wobei der linke Teil der Tastatur ohne Schutzfolie 21, Rahmen 26 und Betätigungselemente 19 dargestellt ist. In diesem Teil ist die Führungsplatte 16 mit den Druckelementen 24 der Kontaktmatte 14 sichtbar einschießlich der flächendeckend vorhandenen Fixieröffnungen 18 zur Aufnahme der Rasthaken 20 der Betätigungselemente 19.

Im rechten Teil der Figur 3 ist die Tastatur komplett dargestellt. In diesem Teil sind unterschiedlich große, im wesentlichen starre Betätigunsgelemente 19 mit Symbolen 22 bzw. Kennzeichnungen 23 vorhanden, die wahlweise ein oder mehrer Einzeltasten 8 überdecken und betätigen. Insbesondere überdeckt und betätigt das in Figur 3 rechts unten dargestellte Betätigungselement 19 mehr als zwei, beispielsweise acht Einzeltasten 8, so daß auf diesem Element eine große Waren-Kennzeichnung in besonders hervorgehobener Art und Weise optimal angebracht werden kann.

Die Figuren 4a und 4b zeigen ein Betätigungselement 19 mit gelenkartigen Verschwächungen, 31, das wiederum mehrere Einzeltasten 8 überdeckt und auf das beispielsweise eine passende größere Folie 30 aufgeklebt ist.

Die Verschwächungen 31 dienen dazu, das Betätigungselement 19 flexibel zu machen und dadurch die erforderliche Betätigungskraft in der Weise zu konzentrieren, daß beim Betätigen nicht alle unter dem Betätigungselement 19 liegenden Einzeltasten 8 gleichzeitig gedrückt werden müssen, sondern nur die direkt unter dem drückenden Finger liegende bzw. die in unmittelbarer Nähe befindlichen Einzeltasten 8.

## Patentansprüche

1. Tastatur für eine vollelektronische, mikrocomputergesteuerte Ladenwaage (1) mit Abrufspeicher, insbesondere für Selbstbedienungs- oder Schnellbedienungszwecke mit einer Tastatur (6) bestehend aus einer Vielzahl von Einzeltasten (8) mit Betätigungselementen (19), wobei den Einzeltasten Symbole und/oder alphanumerische Kennzeichnungen zugeordnet sind, die Tastatur eine Führungsplatte (16) mit einer Vielzahl von in einem bestimmten Rasterabstand angeordneten Einzeltasten mit Schaltkontaktelementen (15) umfaßt, und wobei die Führungsplatte flächendeckend mit Betätigungselementen für die Einzeltasten versehen ist,
**dadurch gekennzeichnet, daß**
die Betätigungselemente (19) unterschiedliche Größen aufweisen und demzufolge eine unterschiedliche Anzahl von Einzeltasten (8) überdecken, daß die Führungsplatte (16) in einem festgelegten Rasterabstand flächendeckend mit Fixieröffnungen (18) versehen ist, die zur Befestigung der unterschiedlich großen Betätigungselemente (19) für die Einzeltasten (18) dienen, daß die Betätigungselemente (19) mittels Rasthaken (20) in den Fixieröffnungen (18) geführt und lösbar verrrastet sind, und daß die mehrere Einzeltasten (6) überdeckenden Betätigungselemente (19) gelenkartige Verschwächungen (31) aufweisen, so daß beim Betätigen nicht alle unter dem Betätigungselement (19) liegenden Einzeltasten (8) gleichzeitig gedrückt werden müssen.

2. Tastatur nach Anspruch 1, dadurch gekennzeichnet, daß sämtliche Betätigungselemente (19) von einer durchgehenden, durchsichtigen Schutzfolie (21), die in einem Rahmen (26) eingespannt ist, überdeckt sind.

3. Tastatur nach Anspruch 1, dadurch gekennzeichnet, daß ein unter einem Betätigungselement (19) angeordnetes Druckelement (24) in seiner Länge und in seiner Festigkeit so ausgelegt ist, daß beim Überschreiten einer bestimmten Betätigungskraft das Betätigungselement (19) an der Führungsplatte (16) zur Anlage kommt.

## Claims

1. A keyboard for a completely electronic shop scales (1) controlled by microcomputer with calling memory, in particular for self-service or quick-service purposes having a keyboard (6) consisting of a plurality of individual keys (8) with operating elements (19), with symbols and/or alphanumeric identifications being associated with the individual keys, the keyboard comprising a guide plate (16) having a plurality of individual keys, disposed with a determined grid spacing, with switching contact elements (15) and the surface of the guide plate being covered with operating elements for the individual keys,
**characterised in that** the operating elements (19) are of different sizes and consequently cover a different number of individual keys (8),
**in that** the surface of the guide plate (16) is covered with fixing apertures (18) with an established grid spacing, which apertures serve to fix the operating elements (19) of different sizes for the individual keys (18),
**in that** the operating elements (19) are guided and detachably locked in the fixing apertures (18) by means of locking hooks (20),
**and in that** the operating elements (19) covering several individual keys (6) comprise joint-type weakened portions (31) so that during operation not all individual keys (8) lying beneath the operating element (19) have to be pressed at the same time.

2. A keyboard according to Claim 1,
**characterised in that** all the operating elements (19) are covered by a continuous, transparent protective membrane (21), which is clamped in a frame (26).

3. A keyboard according to Claim 1,
**characterised in that** the length and strength of a pressure element (24) disposed beneath an operating element (19) are designed so that the operating element (19) comes to abut the guide plate (16) if a determined operating force is exceeded.

## Revendications

1. Clavier pour une balance de magasin (1) entièrement électronique, commandée par microcalculateur et à mémoire interrogeable, notamment pour du libre service ou du service rapide, avec un clavier (6) constitué d'une pluralité de touches individuelles (8) avec des éléments d'actionnement (19), des symboles et/ou des identifications alphanumériques étant associés aux touches individuelles, le clavier comprenant une plaque de guidage (16) avec une pluralité de touches individuelles dotées d'éléments de contact de commutation (15) et disposées selon un pas de quadrillage déterminé, et la plaque de guidage étant pourvue d'éléments d'actionnement couvrant la surface et destinés aux touches individuelles, caractérisé en ce que les éléments d'actionnement (19) présentent des tailles différentes et recouvrent donc un nombre différent de touches individuelles (8), en ce que la plaque de guidage (16) est dotée d'ouvertures de fixation en position (18) couvrant la surface selon un pas de quadrillage défini, qui servent à la fixation des éléments d'actionnement (19) de différentes tailles pour les touches individuelles (8), en ce que les éléments d'actionnement (19) sont, au moyen de crochets de verrouillage (20), guidés et verrouillés de façon amovible dans les ouvertures de fixation en position (18), et en ce que les éléments d'actionnement (19) recouvrant plusieurs touches individuelles (8) présentent des affaiblissements (31) du genre articulations, de sorte que, lors de l'actionnement, il n'est pas nécessaire d'enfoncer simultanément toutes les touches individuelles (8) qui se trouvent en-dessous de l'élément d'actionnement (19).

2. Clavier selon la revendication 1, caractérisé en ce que les différents éléments d'actionnement (19) sont recouverts d'une feuille de protection (21) ininterrompue et transparente, qui est tendue dans un cadre (26).

3. Clavier selon la revendication 1, caractérisé en ce qu'un élément de pression (24) disposé en-dessous d'un élément d'actionnement (19) est agencé avec une longueur et une résistance telles qu'en cas de dépassement d'une force d'actionnement déterminée, l'élément d'actionnement (19) vient en butée contre la plaque de guidage (16).
